Europäisches Patentamt

European Patent Office

Office européen des brevets

(11) Publication number: **0 464 787 A2**

# EUROPEAN PATENT APPLICATION

(21) Application number: **91111016.1**

(22) Date of filing: **03.07.91**

(51) Int. Cl.⁵: **G11B  19/04**, G11B 33/10

(30) Priority: **03.07.90 JP 174479/90**

(43) Date of publication of application:
**08.01.92 Bulletin  92/02**

(84) Designated Contracting States:
**DE FR GB**

(71) Applicant: **MITSUBISHI DENKI KABUSHIKI KAISHA**
**2-2-3, Marunouchi**
**Chiyoda-ku Tokyo(JP)**

(72) Inventor: **Sengoku, Masaharu**
**Itami-seisakusho, 1-1, Tsukaguchihonmachi 8-chome**
**Amagasaki-shi, Hyogo-ken(JP)**

(74) Representative: **Pfenning, Meinig & Partner**
**Mozartstrasse 17**
**W-8000 München 2(DE)**

(54) **Storage device.**

(57) A storage device equipped with an abnormality detecting circuit which detects the contact of an information-recording/reproducing head with a recording medium on the basis of variation of static electricity to be generated at the recording medium or variation of a voltage to be applied between the head and recording medium. The abnormality detecting circuit outputs, in accordance with the detection result, a warning signal to an external device, thereby preventing damage due to the contact of the head with the recording medium.

EP 0 464 787 A2

## Background of the Invention

[Field of the Invention]

The present invention relates generally to storage devices for use in computers, computer peripheral equipment and others, and more particularly to such a storage device which is arranged so as to output a warning or alarm signal in response to a head coming into contact with a recording medium.

[Description of the Prior Art]

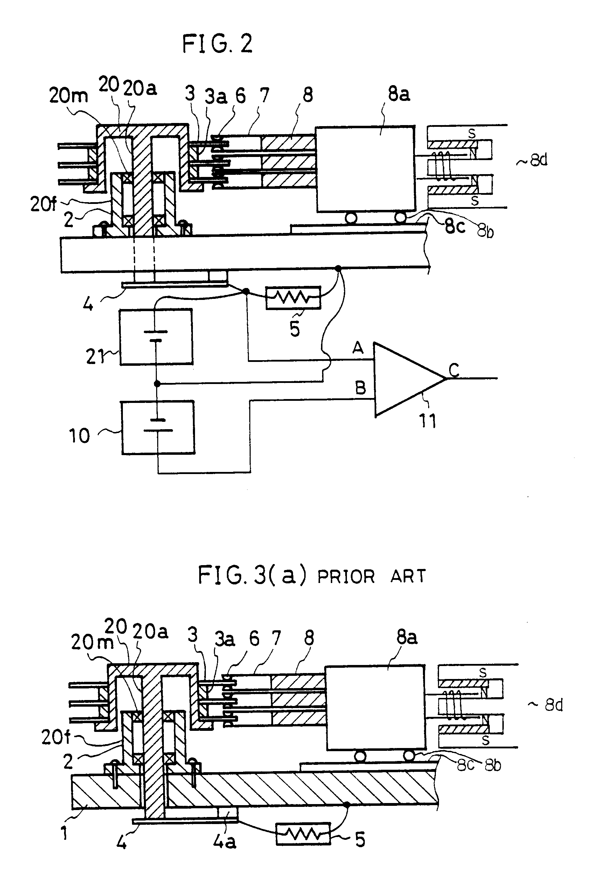

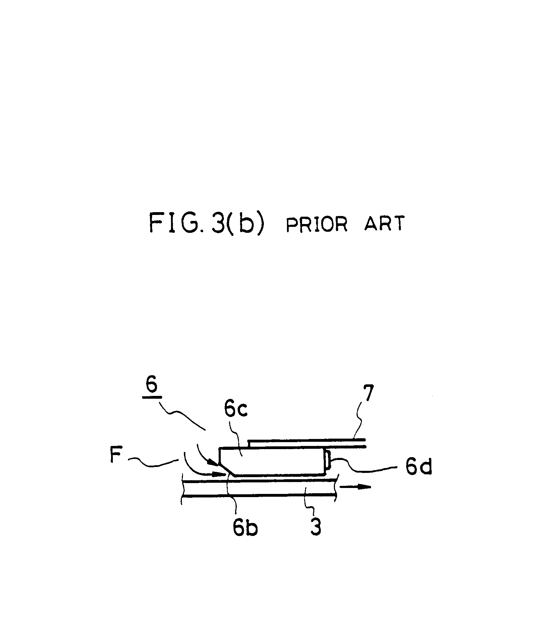

Fig. 3(a) is an illustration of an arrangement of a principal portion of a magnetic disk unit such as described in the Japanese Patent Laid-Open No. 60-205571. In the same illustration, numeral (1) represents a support board acting as a base, (2) designates a spindle disposed on the support board (1), (20) depicts a hub attached to a rotating shaft (20a) of the spindle (2), and (3) denotes recording media comprising magnetic disks placed one upon another on the outer circumference of the hub (20) with each of spacers (3a) being interposed therebetween. Further, numeral (4) is a contact which is attached through a spacer (4a) to the support board (1) and the tip portion of which is brought into contact with one end portion of the rotating shaft (20a) of the spindle (2), (5) indicates a resistor electrically provided between the contact (4) and the support board (1), and (20m) represents a bearing for supporting the rotating shaft (20a) with respect to a shaft-holding portion (20f). Still further, numeral (6) designate heads each disposed in confronting relation to a recording surface of each of the recording media (3) and each composed of a slider (6c) having at its tip portion an air-introducing slope (6b) and a core (6d) attached to a rear end portion of the slider 6c as illustrated in Fig. 3(b) and further composed of a winding, not shown. Illustrated at numeral (7) are pressurizing springs each for holding each of the heads (6) so as to bias it with respect to the recording surface thereof, and illustrated at (8) are arms each for one end portion of each of the pressurizing springs (7), and further illustrated at (8a) is an actuator placed on a rail (8c) with a roller (8b) being interposed therebetween and movable radially with respect to the recording media (3), the movement thereof being controllable through a drive section (8d). In this case, the heads (6) are electrically coupled through the springs (7), arms (8), actuator (8a), roller (8b) and rail (8c) to the support board (1) so as to have the same electric potential as the supporting board (1).

Secondly, a description will be made hereinbelow in terms of operation of the conventional storage device illustrated in Fig. 3. In response to drive circuit of a motor (not shown), the rotating shaft (20a) of the spindle (2) rotates so as to rotates the recording media (3), whereby a viscous air-flow (F) appears on the surfaces of the recording media (3) to buoy the slider (6c) of each of the heads (6). This buoyancy balances the biasing force of each of the pressurizing springs (7) and hence each of the recording media (3) continuously rotates with a slight gap being kept with respect to each of the heads (6). In response to stop of the rotation of the spindle (2), the heads (6) respectively land at the recording media (3), while at this time the actuator 8a moves in the inner-circumferential direction of the recording media (3) so as to land the heads (6) at landing positions on the recording media (3). In response to restart of the rotation of the spindle (2), the heads (6) buoy from the landing positions and move toward information writing or reading positions on the recording media (3), thereby performing the recording or reproducing operation through the heads (6).

Here, in response to a computer (not shown) outputting instruction for recording or reproducing information, the magnetic heads (6) record or reproduce the information on or from the recording media (3) under control of a control circuit (not shown) of the storage device. The rotation of a rotating mechanism including the recording media (3) and the rotating shaft (20a) causes friction with air which in turn generates static electricity. The contact (4) is thus provided so that this static electricity is grounded or released through the resistor (5) to the support board (1). More specifically, because the bearing (20m) is interposed between the rotating shaft (20a) and the shaft-holding portion (20f), the static electricity generated at the recording media (3) is difficult to escapes and hence the contact (4) is provided so that the static electricity is earthed with respect to the support board (1). This is for preventing generation of noises due to the static electricity.

There is a problem which arises with such a conventional storage device, however, in that the heads (6) comes into contact with the recording and/or reproducing positions of the recording media (3) due to vibration, impact, introduction of dust and other causes. When this contact repeatedly occurs, the heads (6) and the recording media (3) are gradually damaged and this damage thereof then grows up, whereby the viscous air-flow becomes turbulent so as to finally take the buoyancy of the heads (6) away so that the heads (6) fall on the surfaces of the recording media (3) to result in mechanical damage and destruction of the heads (6) and the recording media (3). This causes the information of the recording media (3) to disappear.

## Summary of the Invention

The present invention has been developed in order to eliminate the above-described problems, and contemplates to provide a storage device which is capable of preventing the accidental fall of the heads to avoid the disappearance of the recorded information.

According to the present invention, there is provided a storage device which is arranged to be equipped with a capacitor, storing static electricity, to be coupled between the contact and the support board and which is further arranged to be equipped with an abnormality detecting circuit.

According to this invention, there is provided a storage device which is connected with a power source for application of a predetermined voltage to the rotating mechanism coupled between the contact and the support board and which further has an abnormality detecting circuit.

With the former arrangement, the voltage of the capacitor approximately becomes zero volt when the heads come into contact with the recording media, which is detected by the abnormality detecting circuit which in turn, outputs a warning signal.

Further, with the latter arrangement, the voltage to be applied to the rotating mechanism approximately becomes zero volt when the heads are brought into contact with the recording media, which is detected by the abnormality detecting circuit which in turn, outputs a warning signal.

The above and other objects, features, and advantages of the invention will become more apparent from the following description when taken in conjunction with the accompanying drawings.

## Brief Description of the Drawings

Fig. 1(a) shows an arrangement of a principal portion of a storage device according to a first embodiment of the present invention;
Fig. 1(b) shows a circuit corresponding to the arrangement of the Fig. 1(a) storage device;
Fig. 1(c) is an illustration for describing operation thereof;
Fig. 2 illustrates an arrangement of a principal portion of a storage device according to a second embodiment of this invention;
Fig. 3(a) shows an arrangement of a principal portion of a conventional storage device; and
Fig. 3(b) is a side elevational view of a principal portion of the Fig. 3(a) conventional storage device.

## Description of the Preferred Embodiment

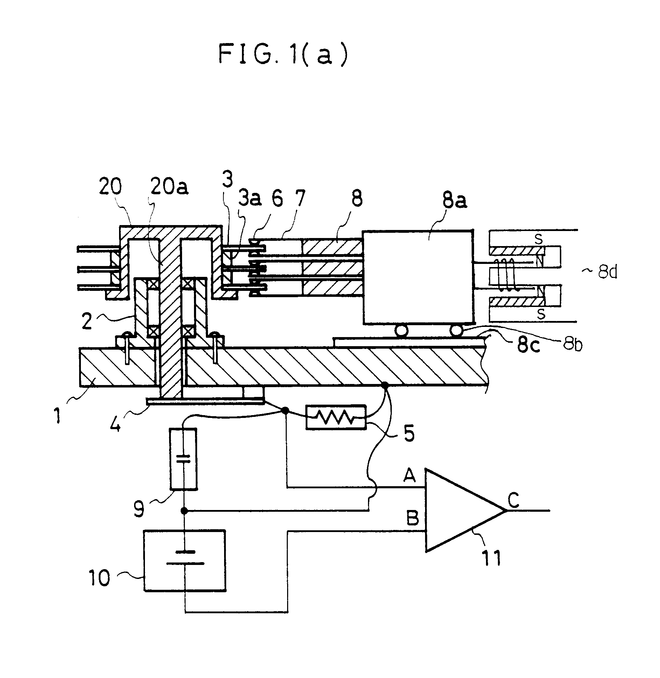

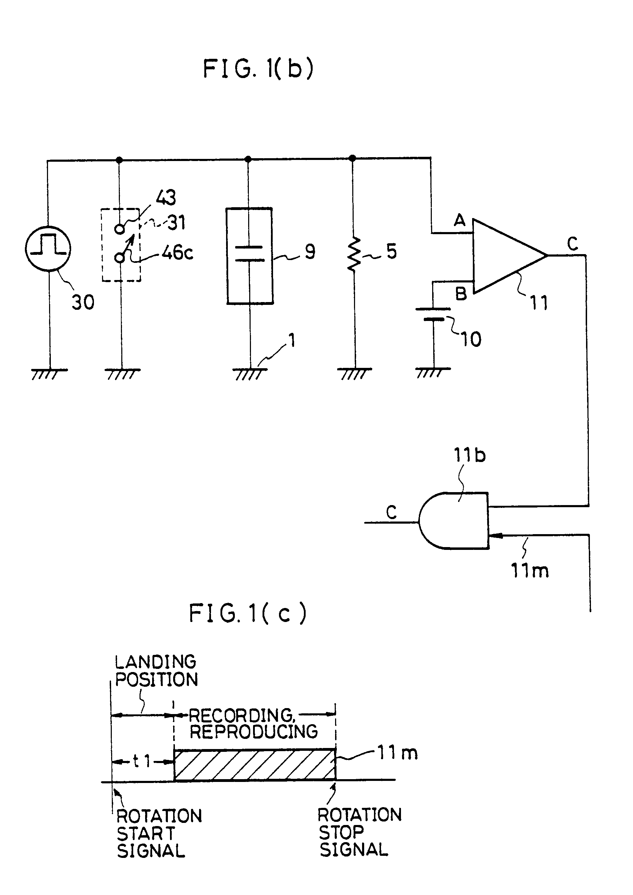

A first embodiment of the present invention will be described hereinbelow with reference to the drawings. Fig. 1(a) is an illustration of an arrangement of a principal portion of a first embodiment of this invention and Fig. 1(b) shows an equivalent circuit thereof, where a description of parts corresponding to those in Figs. 3(a) and 3(b) will be omitted for brevity. In Figs. 1(a) and 1(b), numeral (9) represents a capacitor electrically provided between a contact (4) and a support board (1) acting as an earth and arranged to store a voltage (A) of static electricity generated by means of a static electricity generating source (30) which is consisted of the recording medium (3). Numeral (10) designates a reference power source for generating a reference voltage (B), and (11) depicts a comparator coupled to the capacitor (9) so as to perform comparison between the aforementioned voltages (A) and (B). The comparator (11) acts as an abnormality detecting circuit to output a positive logic warning signal (C) when the comparison result is (A) < (B) and output a negative logic warning signal (C) when (A) ≧ (B). In the Fig.1(b) equivalent circuit, numeral (31) indicates a switching circuit where the recording medium (3) functions as a fixed contact (43), and the head (6) and pressurizing spring (7) act as a moving contact (46c). This switching circuit (31) is normally arranged such that the moving contact (46c) takes the OFF state with respect to the fixed contact (43), while the moving contact (46c) takes the ON state to engage with the fixed contact (43) when the head (6) falls thereon in response to its buoyance ceasing to exist due to dust, scratch or the like.

Secondly, a description will be made hereinbelow in terms of operation of the first embodiment illustrated in Figs. 1(a) and 1(b). In the normal state, the static electricity due to the static electricity generating source (30) is charged into the capacitor (9). Since the reference voltage (B) of the reference power source (10) is in advance set to half the voltage (A) of the capacitor (9), the voltage comparison result becomes (A) ≧ (B) during the normal operation and hence the output (C) of the comparator (11) acting as the abnormality detecting circuit takes the negative logic. When the head (6) comes into contact with the recording medium (3), the switching circuit (31) enters into the ON state so that the capacitor (9) is shorted so as to discharge the stored electric charge. As a result, the voltage across the capacitor (9) approximately becomes zero volt to result in (A) < (B) and thus the output (C) of the comparator (11) turns to the positive logic to be used as the warning signal. On the basis of this warning signal, operation of the storage device automatically stops or a caution signal is generated. This is communicated with a maintenance person which can repair the damaged portion so as to prevent the head (6) from being accidentally fallen. Here, since in practice the head (6) is kept at the landing position until a time t1 elapses from start of rotation of the recording medium (3) after generation of a rotation start signal, a gate (11b) is closed during this time. That is, after the elapse of the time t1, a gate control signal (11m) is generated so that the gate (11b) takes the open state so as to output the warning signal (C) to an external device. Thus, it is possible to prevent an error operation when the head (6) is at the landing position.

Fig. 2 illustrates an arrangement of a principal portion of a second embodiment of this invention where a power source (21) is placed between a contact (4) and a support board (1). A reference voltage (B) of a reference power source (10) is set to half a voltage (A) of the power source (21), and the relation between the voltages (A) and (B) is (A) $\geq$ (B) during the normal operation and hence an output (C) of a comparator (11) acting as an abnormality detecting circuit becomes negative logic. In response to contact of the head (6) with the recording medium (3), the relation therebetween takes (A) < (B) so that the output (C) of the comparator (11) turns to positive logic to be used as a detection signal. The equivalent circuit can be constituted by replace the capacitor (9) shown in Fig. 1(b) with the power source (21).

Here, the voltage (A) of the power source (21) and the voltage (B) of the reference power source (10) are set to be sufficiently higher as compared with the voltage of the static electricity occuring at the rotating mechanism and this arrangement can prevent the detection from being affected by the static electricity. With this circuit being arranged such that the power source (21) is shorted to decrease the voltage in the case that a slider (6c) of the head (6) comes into contact with the recording medium (3), the detection is effected by comparing the reference power source (10) with a value corresponding to this voltage decrease.

Although in the first embodiment the detection is effected through the comparator (11) under the condition of the provision of the reference power source (10), it is also appropriate that the contact of the head (6) is detected by checking the flashing of an indicating means such as a light-emitting diode to be lighted by application of a voltage or by using the turning-off operation of a relay circuit or solenoid circuit to be operated by application of a voltage. That is, usable is any means which detects variation of the voltage. Further, although in the first and second embodiments the heads (6) are arranged to be moved, it is also appropriate that the heads (6) are of the fixed types. In addition, although the above description has been made in terms of a storage device equipped with a magnetic disk unit, the present invention is not limited thereto but is applicable to a storage device which is of the optical, magneto-optic, laser, electrical-field, or charge type. Moreover, it is also appropriate to use a power source of the storage device or a different device as the reference power source (10) and the power source (21).

As described above, according to the storage devices of the first and second embodiments, since the contact of the head with the recording medium is arranged to be detectable, the repair can be made before the falling accident of the head, thereby preventing the mechanical damage and the disappearance of the recorded information.

## Claims

1. A storage device comprising:
    recording medium means for storing thereon information;
    spindle means provided with a rotating shaft for supporting said recording medium means to be rotatable;
    base means for supporting said spindle means;
    head means disposed in confronting relation to a recording surface of said recording medium means for recording and reproducing information on and from said recording medium;
    actuator means positioned on said base means so as to support said head means;
    contact means arranged to come into contact with said rotating shaft and arranged to be coupled through resistor means to said base means so as to be grounded;
    capacitor means coupled through said rotating shaft and said contact means to said recording medium means for accumulating static electricity to be generated at said recording medium means; and
    abnormality detecting circuit means coupled to said capacitor means for outputting an warning signal when charge accumulated in said capacitor means decreases.

2. A storage device as claimed in claim 1, wherein said abnormality detecting circuit means includes a reference power source and a comparator to compare a voltage across said capacitor means with a voltage of said reference power source so as to output said warning signal when the voltage across said capacitor becomes lower than the voltage of said reference power source.

3. A storage device comprising:
    recording medium means for storing thereon information;

spindle means provided with a rotating shaft for supporting said recording medium means to be rotatable;

base means for supporting said spindle means;

head means disposed in confronting relation to a recording surface of said recording medium means for recording and reproducing information on and from said recording medium;

actuator means positioned on said base means so as to support said head means;

contact means arranged to come into contact with said rotating shaft and arranged to be coupled through resistor means to said base means so as to be grounded;

power source means provided between said contact means and said base means and arranged to apply a predetermined voltage; and

abnormality detecting circuit means coupled to said power source means for outputting an warning signal when said voltage of said power source lowers.

4. A storage device as claimed in claim 3, wherein said abnormality detecting circuit means provided with a reference power source and a comparator to output said warning signal when a voltage from said power source means for applying said predetermined voltage becomes lower than a voltage of said reference power source.

FIG. 1(a)

# FIG. 1(b)

# FIG. 1(c)

## FIG. 2

## FIG. 3(a) PRIOR ART

FIG. 3(b) PRIOR ART